(19) **Europäisches Patentamt / European Patent Office / Office européen des brevets**

(11) **EP 2 277 074 B1**

(12) **FASCICULE DE BREVET EUROPEEN**

(45) Date de publication et mention
de la délivrance du brevet:
**07.12.2011 Bulletin 2011/49**

(21) Numéro de dépôt: **09727298.3**

(22) Date de dépôt: **27.03.2009**

(51) Int Cl.:
***G02B 17/08*** (2006.01)   ***G02B 27/01*** (2006.01)

(86) Numéro de dépôt international:
**PCT/EP2009/053666**

(87) Numéro de publication internationale:
**WO 2009/121810 (08.10.2009 Gazette 2009/41)**

(54) **LUNETTES INFORMATIVES**

INFORMATIVE BRILLE

INFORMATIVE EYEGLASSES

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **03.04.2008 FR 0852207**

(43) Date de publication de la demande:
**26.01.2011 Bulletin 2011/04**

(73) Titulaire: **Optinvent**
**35700 Rennes (FR)**

(72) Inventeurs:
• **SARAYEDDINE, Khaled**
**F-35700 Rennes (FR)**
• **DUBROCA, Guilhem**
**F-35700 Rennes (FR)**
• **BENOIT, Pascal**
**F-35700 Rennes (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
| | |
|---|---|
| EP-A- 1 385 023 | FR-A- 2 873 212 |
| JP-A- 2002 162 598 | SU-A1- 1 691 809 |
| US-A- 2 378 301 | US-A1- 2006 228 073 |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne des lunettes informatives comportant un collimateur catadioptrique.

Le document FR-A-2 873 212 divulgue des lunettes informatives comprenant un écran et un élément optique qui émettent un flux lumineux dans un insert optique mais l'implantation de ces éléments n'est pas suffisamment décrite. En particulier, il n'est pas précisé comment ces éléments permettent d'obtenir une image dont les dimensions, notamment verticales, sont grandes.

Le document JP-A-2002162598 divulgue des lunettes uniformatives comprenant un guide optique et un collimateur catadioptique.

Un objet de la présente invention est de proposer des lunettes informatives qui ne présentent pas les inconvénients de l'art antérieur.

A cet effet, sont proposées des lunettes informatives comportant:

- un guide optique formant un verre de lunettes et présentant une section d'injection et une section d'extraction,
- un collimateur catadioptrique comprenant :

    - une surface d'entrée réfractive, une première surface réfléchissante, une deuxième surface réfléchissante et une surface de sortie réfractive, chaque surface constituant une surface de révolution de même axe de révolution, ledit axe de révolution constituant l'axe optique du collimateur,
    - une source d'éclairement générant un faisceau lumineux incident éclairant la surface d'entrée réfractive, et dont l'axe est désaxé par rapport audit axe optique et qui est sensiblement dans le plan focal dudit collimateur catadioptrique,

    les surfaces étant

    - telles que le faisceau lumineux incident est successivement réfracté par la surface d'entrée réfractive, réfléchi par la première surface réfléchissante, réfléchi par la deuxième surface réfléchissante et réfracté par la surface de sortie réfractive en un faisceau lumineux sortant, et
    - telles que le faisceau lumineux sortant est collimaté sensiblement à l'infmi parallèlement à une direction formant un angle d'inclinaison non nul avec ledit axe optique,

le collimateur catadioptrique et la source d'éclairement étant tels que le faisceau lumineux sortant pénètre dans le guide optique par la section d'injection et est extrait en un faisceau lumineux extrait par la section d'extraction.

Avantageusement, la section d'injection se présente sous la forme d'une surface rectangulaire de largeur " p " et de hauteur " p' " supérieure à p.

Avantageusement, le collimateur catadioptrique est monobloc.

Avantageusement, les lunettes informatives comportent une branche et le collimateur catadioptrique et la source d'éclairement sont disposés sur ladite branche.

Avantageusement, la première surface réfléchissante est convexe et la surface de sortie réfractive est convexe.

Avantageusement, la surface d'entrée réfractive est concave et la deuxième surface réfléchissante est concave.

Avantageusement, la surface d'entrée réfractive, la première surface réfléchissante, la deuxième surface réfléchissante et la surface de sortie réfractive sont des surfaces asphériques d'ordre pair.

Avantageusement, la source d'éclairement est collée à la surface d'entrée réfractive.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

    la Fig. 1 est une représentation schématique théorique d'un projecteur optique mis en oeuvre dans des lunettes informatives selon l'invention,
    la Fig. 2 est une représentation schématique du projecteur optique mis en oeuvre dans des lunettes informatives selon l'invention en vue de dessus,
    la Fig. 3 est une représentation similaire à celle de la Fig. 2, dans laquelle une pluralité de chemins optiques a été représentée,
    la Fig. 4 est une représentation schématique du projecteur optique de la Fig. 3 en vue de côté,
    la Fig. 5 est une vue de dessus des lunettes informatives selon l'invention,
    la Fig. 6 est une vue de face des lunettes informatives selon l'invention,
    la Fig. 7 représente schématiquement une comparaison entre projecteur optique de l'invention et un projecteur optique de l'état de la technique,

la Fig. 8 est une représentation schématique du fonctionnement en double mode d'un collimateur catadioptrique mis en oeuvre dans des lunettes informatives selon l'invention.

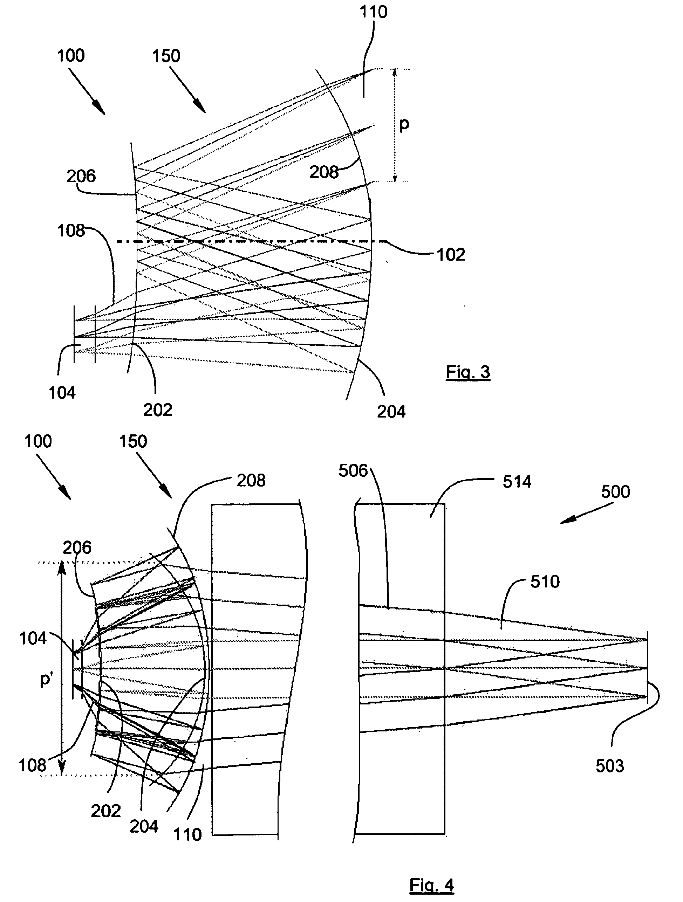

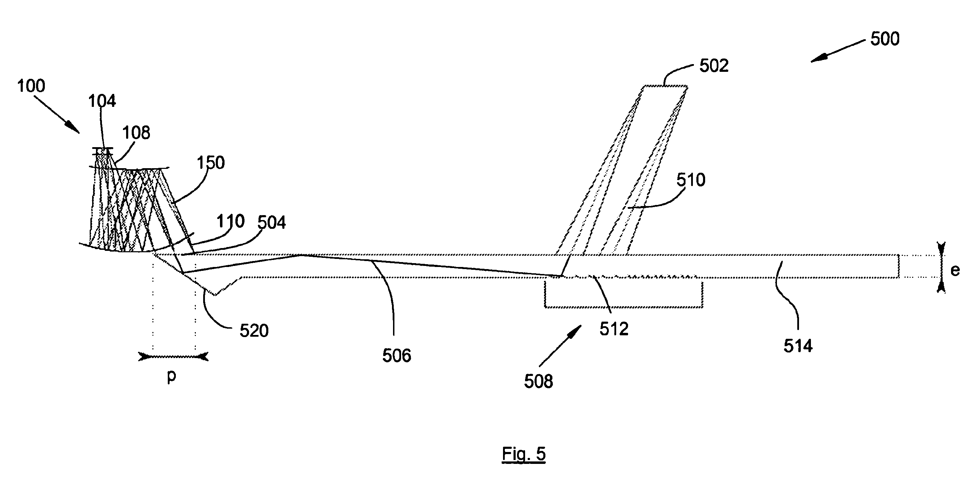

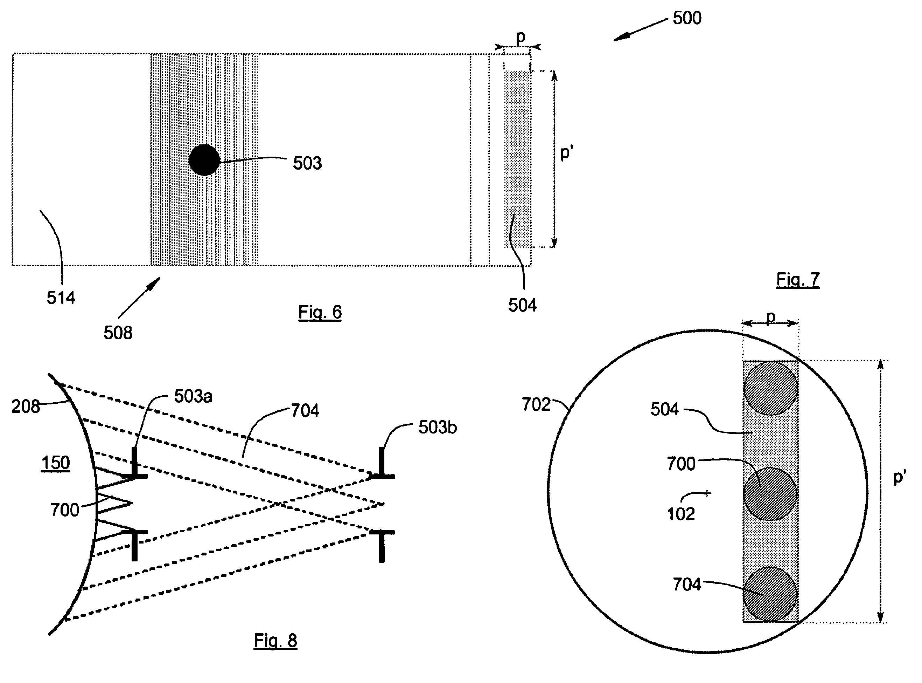

Dans la suite de la description, les termes relatifs à des positions, comme par exemple, "dessus" ou "horizontal" sont exprimés en relation avec des lunettes informatives selon l'invention telles qu'elles sont utilisées, c'est-à-dire lorsque la personne qui les portent est assise ou debout et dont la Fig. 6 est considérée comme une vue de face et dont la Fig. 5 est considérée comme une vue de dessus et dont la Fig. 4 est considérée comme une vue de côté.

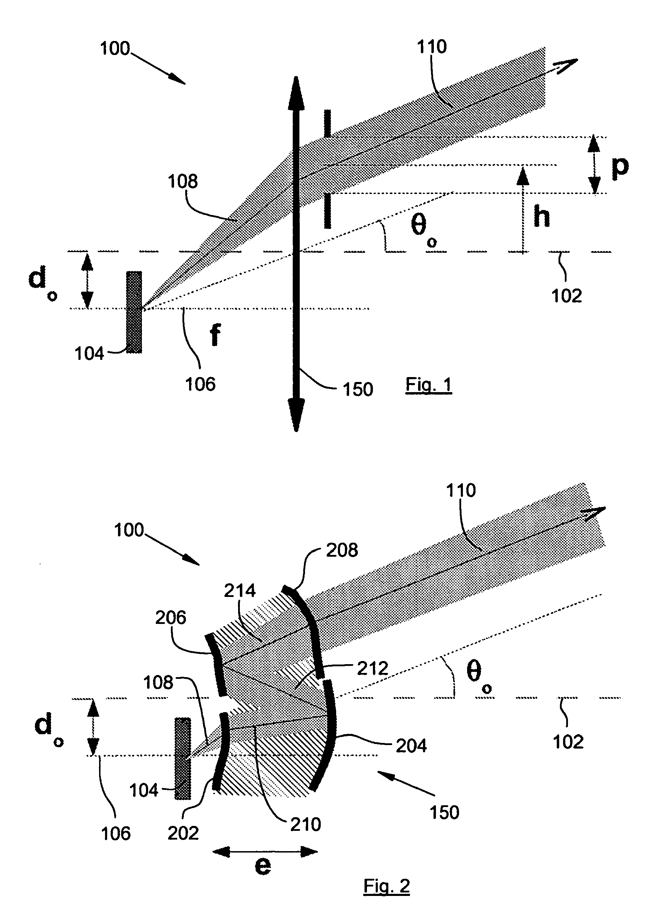

La Fig. 1 montre une représentation théorique d'un projecteur optique 100 mis en oeuvre dans des lunettes informatives selon l'invention en vue de dessus. Le projecteur optique 100 comprend une source d'éclairement 104 et un collimateur catadioptrique 150 comprenant un axe optique 102.

La source d'éclairement 104 peut être par exemple un écran OLED ou LCD rétro éclairé ou autre. La source d'éclairement 104 est de préférence plane et de forme rectangulaire. La normale au plan de la source d'éclairement 104 est référencée 106 et est parallèle à l'axe optique 102 mais n'est pas confondue avec ce dernier. La distance entre la normale 106 et l'axe optique est notée '$d_0$'. La source d'éclairement 104 est placée sensiblement dans le plan focal du collimateur catadioptrique 150, c'est-à-dire à une distance notée 'f'. La source d'éclairement 104 est dite au plan focal même si elle est légèrement distante de ce plan du moment que le projecteur optique 100 permette de visualiser une image projetée nette. Selon un mode de réalisation préféré, la source d'éclairement 104 est dite au plan focal, lorsque sa position s'écarte de moins de 10% de 'f'.

Le collimateur catadioptrique 150 est un ensemble monobloc dont la forme est explicitée ci-après.

Un faisceau lumineux incident 108, issu de la source d'éclairement 104, vient éclairer le collimateur catadioptrique 150 et est dévié en un faisceau lumineux sortant 110 qui est collimaté. Le faisceau lumineux sortant 110 a une direction générale de propagation qui présente avec l'axe optique 102, un angle d'inclinaison noté '$\theta_0$' non nul. La présence de l'angle d'inclinaison $\theta_0$ est due, en particulier, au fait que la normale 106 à la source d'éclairement 104 n'est pas confondue avec l'axe optique 102. Le faisceau lumineux sortant 110 est collimaté sensiblement à l'infini parallèlement à la direction formant avec l'axe optique 102 l'angle d'inclinaison $\theta_0$ non nul.

Le faisceau lumineux sortant 110 est considéré comme collimaté à l'infini si la source d'éclairement 104 est au plan focal, ce qui se traduit par un faisceau lumineux sortant 110 parallèle issu du collimateur 150 pour un point donné de la source d'éclairement 104. La collimation peut ne pas être strictement à l'infini mais uniquement à une grande distance. Selon un mode de réalisation préféré, le faisceau lumineux sortant 110 est considéré comme collimaté à l'infini, si le rapport entre la distance de l'image projetée et de la distance focale est supérieur à 50, où la distance de l'image projetée est déterminée par la position d'image la plus nette.

La Fig. 2 montre une vue de dessus du projecteur 100 et en particulier, du collimateur catadioptrique 150. Dans le mode de réalisation présenté sur la Fig. 2, la source d'éclairement 104 est distante du collimateur catadioptrique 150, mais elle peut également être collée au collimateur catadioptrique 150, et en particulier à la surface d'entrée réfractive 202, de manière à former un projecteur optique 100 facilement manipulable.

Le collimateur catadioptrique 150 est constitué d'un matériau optique, comme par exemple de l'acrylique. Le collimateur catadioptrique 150 est un ensemble monobloc ce qui facilite la mise en place et réduit l'encombrement du projecteur optique 100. Le collimateur catadioptrique 150 peut être moulé, ce qui facilite la mise au point et réduit les coûts de fabrication.

Le collimateur catadioptrique 150 présente une surface d'entrée réfractive 202, une première surface réfléchissante 204, une deuxième surface réfléchissante 206 et une surface de sortie réfractive 208.

Les quatre surfaces 202, 204, 206 et 208 sont des surfaces de révolution qui ont toutes le même axe de révolution qui est l'axe optique 102 présenté ci-dessus et qui constitue l'axe optique du collimateur catadioptrique 150. Les quatre surfaces 202, 204, 206 et 208 ont ainsi un axe de révolution 102 commun, permettant de faciliter la production et de réduire les coûts de fabrication du collimateur catadioptrique 150, tout en obtenant de très bonnes performances.

Le faisceau lumineux incident 108, issu de la source d'éclairement 104 éclaire et est réfracté par la surface d'entrée réfractive 202. Le faisceau lumineux 210 ainsi réfracté est réfléchi par la première surface réfléchissante 204. Le faisceau lumineux 212 ainsi réfléchi est réfléchi par la deuxième surface réfléchissante 206. Le faisceau lumineux 214 ainsi réfléchi est réfracté par la surface de sortie réfractive 208 et devient le faisceau lumineux sortant 110.

Le fait que la normale 106 à la source d'éclairement 104 n'est pas confondue avec l'axe optique 102, c'est-à-dire que la source d'éclairement 104 est désaxée par rapport à l'axe optique 102, évite la superposition des faisceaux intermédiaires 210, 212 et 214 dans le collimateur catadioptrique 150. Ceci est également du aussi au fait que la pupille du système est décalée par rapport à l'axe optique 102 du collimateur 150, permettant de sélectionner les faisceaux lumineux issus de la source lumineuse 104 ayant un angle non nul avec l'axe optique 102 du collimateur 150.

Les surfaces 202, 204, 206 et 208 du collimateur catadioptrique 150 sont disposées de manière à éloigner les faisceaux intermédiaires 210, 212 et 214 les uns des autres à chaque interface.

La compacité du collimateur catadioptrique 150 et donc du projecteur optique 100 est améliorée par le fait du repliement des chemins optiques dans le collimateur catadioptrique 150.

Dans un mode de réalisation préféré et présenté sur la Fig. 2, la surface d'entrée réfractive 202 est concave et la deuxième surface réfléchissante 206 est concave.

De préférence, la puissance optique de la surface d'entrée réfractive 202 est légèrement positive.

De préférence, la puissance optique de la deuxième surface réfléchissante 206 est légèrement négative.

Avantageusement, la surface réfléchissante 204 est convexe et la surface de sortie réfractive 208 est convexe.

Même si une telle disposition constitue un mode de réalisation préféré de l'invention, d'autres agencements peuvent également convenir, du moment que le faisceau lumineux sortant 110 est collimaté sensiblement à l'infini et que les faisceaux lumineux intermédiaires ne se recouvrent pas.

La Fig. 3 montre une vue similaire à celle de la Fig. 2, avec les parcours de plusieurs faisceaux lumineux issus de différents points de la source d'éclairement 104.

Les surfaces 202, 204, 206 et 208 sont disposées les unes par rapport aux autres de manière à ce que, en provenant de la source d'éclairement 104, chaque faisceau lumineux soit successivement réfracté par la surface d'entrée réfractive 202, réfléchi par la première surface réfléchissante 204, réfléchi par la deuxième surface réfléchissante 206 et réfracté par la surface de sortie réfractive 208.

Le collimateur catadioptrique 150 est conformé de manière à ce qu'après la surface de sortie réfractive 208, le faisceau lumineux sortant 110 présente horizontalement une dimension appelée 'pupille' et notée 'p' qui est de préférence de l'ordre de 4 mm.

La Fig. 4 montre une vue de côté du projecteur 100 implémenté dans des lunettes informatives 500 selon l'invention, avec les parcours de plusieurs faisceaux lumineux issus de différents points de la source d'éclairement 104.

Le faisceau lumineux sortant 110 présente verticalement une dimension p' supérieure à la pupille p et est ici de l'ordre de 12 mm en sortie de la surface de sortie réfractive 208. Les limitations du faisceau lumineux sortant 110 sont dues, en particulier, à la forme de la surface de sortie réfractive 208 qui, verticalement, présente une longueur d'environ p' et qui, horizontalement, présente une longueur p. En particulier, la longueur horizontale est limitée sur un des côtés par la première surface réfléchissante 204 qui est recouverte d'un revêtement réfléchissant qui empêche toute transmission.

Le faisceau de sortie 110 pénètre dans un guide optique 514 qui est un verre des lunettes informatives 500 et en ressort sous forme d'un faisceau lumineux extrait 510 qui pénètre dans la pupille 503 de l'oeil de l'observateur.

Dans la direction verticale, les faisceaux ne sont pas obligatoirement limités en position à la sortie du collimateur 150, et dans le cas des lunettes informatives, la pupille verticale est située en avant au niveau de l'oeil de l'observateur.

Dans le mode de réalisation présenté ici, le collimateur catadioptrique 150 présente horizontalement une dimension de l'ordre de 10 mm et verticalement une dimension de l'ordre de 20 mm.

La Fig. 5 représente une vue de dessus des lunettes informatives 500 et dont les verres 514 d'épaisseur 'e' constituent le guide optique.

Le projecteur optique 100 peut être incorporé dans l'une des branches des lunettes 500.

Le faisceau lumineux sortant 110 pénètre dans le guide optique 514 par une section d'injection 504.

La section d'injection 504 se présente sous forme d'une surface plane rectangulaire de largeur " p " et de hauteur " p' ". La section d'injection 504 est disposée perpendiculairement à l'axe 102, en vis-à-vis de la surface de sortie réfractive 208 de manière à capter le faisceau lumineux sortant 110. Le faisceau lumineux sortant 110 pénètre alors dans le guide optique 514 et il porte alors la référence 506.

La section d'injection 504 présente une face arrière 520 qui est orientée de manière à ce que lorsque le faisceau lumineux 506 l'atteint, il est dévié vers la section d'extraction 508.

Le faisceau lumineux 506 est alors transporté dans le guide optique 514 sur une longueur arbitraire. Le guide optique 514 est constitué d'un matériau transparent à la lumière et présentant deux faces parallèles. Le faisceau lumineux 506 est guidé par ces deux faces et se propage par réflexion totale dans le guide. Si l'indice du matériau transparent, composant le guide, est supérieur à ceux des milieux qui l'entourent, des réflexions internes totales se produisent naturellement dès lors que l'angle d'incidence des rayons du faisceau est suffisamment faible par rapport à la face du guide. Alternativement, si les indices extérieurs sont supérieurs ou égaux, il est possible de disposer d'un dépôt de couches minces de matériau diélectrique pour suppléer dans certaines limites à la condition de réflexion totale interne. Le faisceau lumineux 506 arrive alors dans une zone appelée section d'extraction 508 qui permet au faisceau lumineux 506 de ressortir du guide optique 514. Cette zone d'extraction 508 est située sur l'une des faces du guide optique 514. Elle va permettre de renvoyer le faisceau lumineux 506 vers l'autre face selon un angle sensiblement perpendiculaire qui va permettre sa sortie du guide optique 514. Le faisceau lumineux 510, ainsi extrait du guide optique 514, peut alors être projeté vers l'oeil 502 de l'utilisateur.

La section d'extraction 508 est une section comprenant des microstructures qui sont ici disposées en surface sur l'une des faces du guide optique 514, les rayons lumineux extraits sortent alors par la face opposée du guide optique 514. Les microstructures peuvent être réfractives ou réflexives. La structure peut être unidimensionnelle, composée de lignes extractrices ou bidimensionnelles, formée d'une mosaïque d'éléments extracteurs. Les éléments extracteurs sont, par exemple, des prismes à face plane dont l'angle actif est constant le long de la structure. La taille et la disposition de ces structures dépendent de l'application utilisant le guide. Dans le cas d'un système optique de vision oculaire, la taille des microstructures sera avantageusement petite par rapport à la taille de la pupille de l'oeil, par exemple de l'ordre de quelques dizaines de μm. De cette façon, l'image ne varie pas en fonction de la position et des mouvements de l'oeil. Du fait de leur taille et de leur faible distance de l'oeil, ces microstructures sont également invisibles à l'oeil nu. D'autre part, ces microstructures ne couvrant pas intégralement la face du guide, celui-ci reste transparent et permet une vision à travers le guide tout en visualisant l'image issue du guide. Le système permet la vue à travers (*see through* en anglais).

La section d'extraction peut être constituée de sections inclinées semi-réfléchissantes.

Selon un mode de réalisation préféré des microstructures, chaque microstructure 512 forme un prisme réfléchissant en saillie sur la face du guide optique 514 qui est opposée à l'oeil 502. Un rayon incident du faisceau lumineux 506, qui frappe la face inclinée de la microstructure 512, est réfléchi vers la seconde face du guide selon un angle proche de la normale à cette face. De ce fait, le rayon réfléchi par la microstructure 512 n'est pas réfléchi par la seconde face et sort du guide optique pour former le faisceau lumineux extrait 510. La microstructure 512 est formée sur la face opposée à la face de sortie de l'image.

La dimension de 4 mm de la pupille p est particulièrement avantageuse dans cette application, puisque le guide optique 514 a, pour un angle d'injection dans la section d'injection 514 de l'ordre de 30°, une épaisseur'e' de 2mm et que le diamètre de la pupille de l'oeil 502 est de l'ordre de 4 mm.

Un exemple d'un mode de réalisation particulier du collimateur catadioptrique 150 va maintenant être donné dans le cas d'un champ de vision de 18°.

La surface d'entrée réfractive 202, la première surface réfléchissante 204, la deuxième surface réfléchissante 206 et la surface de sortie réfractive 208 sont ici des surfaces asphériques d'ordre pair (*even asphere surface* en Anglais) dont la flèche 'z' est donnée par la formule:

$$z(r) = \frac{\dfrac{r^2}{R}}{1 + \sqrt{1 - (1+k)\dfrac{r^2}{R^2}}} + \sum_i \beta_i . r^i \qquad (1)$$

où pour chaque surface 202, 204, 206, 208, 'r' est le rayon au centre, R' est le rayon de courbure, 'k' est la conicité, et $\beta_i$ sont des constantes d'ajustement du coefficient de conicité en fonction de la position.

La source d'éclairement 104 est à une distance $d_0$ = 3,06 mm de l'axe optique 102. Le faisceau lumineux incident 108 parcourt 0,5 mm dans l'air avant d'atteindre la surface d'entrée réfractive 202 du collimateur catadioptrique 150 qui est ici en acrylique.

Pour la surface d'entrée réfractive 202 qui est ici concave, on a r=4,3484095 mm et R=-59,20 mm et k= 0.

Pour la première surface réfléchissante 204, qui est ici optiquement concave, on a r=8,984715 mm et R=18 mm et k=0,6.

Pour la deuxième surface réfléchissante 206, qui est ici optiquement convexe, on a r=5,31096 mm et R=31,25 mm et k=21,8.

Pour la surface de sortie réfractive 208 qui est ici convexe, on a r=7,488155 mm et R=12,6 mm et k=0,6.

La distance entre le sommet de la surface d'entrée réfractive 202 et le sommet de la première surface réfléchissante 204, est de 9,864 mm.

La distance entre le sommet de la première surface réfléchissante 204 et le sommet de la deuxième surface réfléchissante 206, est de 9,864 mm.

La distance entre le sommet de la deuxième surface réfléchissante 206 et le sommet de la surface de sortie réfractive 208, est de 9,864 mm.

Le tableau ci-dessous récapitule les constantes P pour chaque surface 202, 204, 206, 208 en fonction de la puissance de 'r'.

| Surface/puissance | $r^2$ | $r^4$ | $r^6$ | $r^8$ |
|---|---|---|---|---|
| Surface d'entrée réfractive (202) | 0 | 0.0011892508 | -4,2057978e-005 | 5,7193979e-007 |
| Première surface réfléchissante (204) | 0 | -4,0583521 e-006 | -3,4650905e-009 | -1,1423817e-010 |
| Deuxième surface réfléchissante (206) | 0 | -1,46021005e-005 | -1,6758156e-007 | -1,7946628e-008 |
| Surface de sortie réfractive (208) | 0 | -3,3410654e-005 | -9,4958857e-008 | -4,072712e-009 |

Dans le mode de réalisation présenté ici, la pupille p est de 4 mm et l'angle d'inclinaison $\theta_0$ est de 22,5°. La distance notée 'h' et représentative de la distance entre l'axe optique 102 et le centre de la pupille p est de 4,5 mm.

La Fig. 6 est une vue de face des lunettes informatives 500.

La mise en place du guide optique 514 à la suite du collimateur catadioptrique 150 permet de limiter horizontalement le passage du faisceau lumineux sortant 110 à la largeur p qui est ici de 4mm, alors que verticalement, il n'impose aucune limite significative. En effet, horizontalement, le faisceau lumineux 506 qui est véhiculé à l'intérieur du guide optique 514 est guidé par réflexion totale interne sur les faces dudit guide optique 514 qui sont distantes d'une épaisseur relativement faible 'e' qui est ici de l'ordre de 2 mm. C'est l'écartement des faces parallèles du guide optique 514 qui limite la largeur de sortie du collimateur catadioptrique 150. Tandis que, verticalement, le faisceau lumineux 506 suit sa trajectoire sans être détourné de cette façon jusqu'à être intercepté par la pupille 503 de l'oeil de l'observateur. Cela impose la hauteur de sortie du collimateur p'.

La Fig. 7 est une représentation comparative de la section d'injection 504 dans le cadre de l'invention et d'un système optique de l'état de la technique.

La section d'injection 504 est éclairée par le faisceau lumineux sortant 110 dont trois des faisceaux utiles 700, 704 ont été représentés, les deux faisceaux utiles extrêmes 704 et le faisceau utile milieu 700. La projection de chacun de ces faisceaux utiles 700, 704 se présente sous la forme d'un cercle de diamètre p et la distance maximale entre les limites extérieures des faisceaux utiles extrêmes 700, 704 est de p'. Ainsi, le faisceau lumineux sortant 110 s'inscrit dans le rectangle de largeur p et de hauteur p' qui correspond à la section d'injection 504.

Dans les systèmes optiques de l'état de la technique où les surfaces optiques possèdent un axe de révolution commun (D), le faisceau lumineux sélectionné par l'objectif qui est émis par les points de l'objet situés à une certaine distance 'r' de cet axe optique (D) sont tous identiques à une rotation près autour de (D), ce qui n'est pas le cas dans le cadre de l'invention, puisque le faisceau lumineux entrant 108 émis par la source d'éclairement 104 ne présente pas la symétrie de rotation autour de l'axe optique 102.

Le collimateur catadioptrique 150 selon l'invention constitue la restriction à une ouverture restreinte d'un système optique possédant une ouverture plus grande.

Ainsi, si un objectif à grande ouverture et de même focale avait pour pupille de sortie le cercle référencé 702, il réaliserait une bonne image. Mais pour réaliser l'image à projeter, il est uniquement nécessaire de réaliser des faisceaux lumineux utiles 700, 704 de diamètres plus petits, car la pupille 503 d'un oeil humain 502 est relativement petite (environ 4 mm de diamètre).

Comme un objectif de grande ouverture est compliqué à réaliser, la limitation à des faisceaux lumineux utiles 700, 704 de petites dimensions est intéressante. L'agencement proposé par l'invention permet de réaliser un objectif de focale environ 8.5 mm et une ouverture haute de 12 mm, ce qui représenterait une ouverture très importante pour un objectif de l'état de la technique.

L'image générée par la source d'éclairement 104 présente une certaine hauteur et plus cette hauteur est importante, plus p' est grand par rapport à p. La distance parcourue dans le guide optique 514 est de l'ordre de 40 mm et la distance parcourue d'ans l'air jusqu'à la pupille 503 de l'oeil est de l'ordre de 15 mm, et la distance totale est relativement grande (55 mm). Du fait de cette longueur totale grande, une hauteur angulaire de l'image de quelques degrés impose que p'/p soit supérieur à 2. Il est même de préférence de l'ordre de 3, mais des valeurs supérieures sont possibles.

La Fig. 8 est une représentation schématique du fonctionnement en double mode horizontal et vertical du collimateur catadioptrique 150. Pour des raisons de clarté, le guide optique n'est pas représenté.

Le collimateur catadioptrique 150 fonctionne suivant simultanément deux modes.

Dans le premier mode, pour les faisceaux lumineux utiles 700 situés sur une ligne horizontale, le collimateur catadioptrique 150 se comporte comme un oculaire conçu pour fonctionner avec une pupille 503a de l'oeil proche de la surface de sortie réfractive 208.

Dans le deuxième mode, pour les faisceaux utiles 704 situés sur une ligne verticale, le collimateur catadioptrique 150 se comporte comme un oculaire conçu pour fonctionner avec une pupille 503b éloignée de cette même surface de sortie réfractive 208.

Dans le cas de lunettes informatives 500, le guide optique 514 peut être réalisé dans du verre d'indice n=1.6 référencé S-TIM8 de la société OHARA GmbH. Le guide optique a une épaisseur de 2 mm et l'oeil 502 est à une distance de 15 mm du guide optique 514.

Bien entendu, la présente invention n'est pas limitée aux exemples et modes de réalisation décrits et représentés, mais elle est susceptible de nombreuses variantes accessibles à l'homme de l'art, dans le cadre des revendications.

**Revendications**

1. Lunettes informatives (500) comportant:

   - un guide optique (514) formant un verre de lunettes (500) et présentant une section d'injection (504) et une section d'extraction (508),
   - un collimateur catadioptrique (150) comprenant :

     - une surface d'entrée réfractive (202), une première surface réfléchissante (204), une deuxième surface réfléchissante (206) et une surface de sortie réfractive (208), chaque surface (202, 204, 206, 208) constituant une surface de révolution de même axe de révolution, ledit axe de révolution constituant l'axe optique (102) du collimateur (150),
     - une source d'éclairement (104) générant un faisceau lumineux incident (108) éclairant la surface d'entrée réfractive (202), et dont l'axe est désaxé par rapport audit axe optique (102) et qui est sensiblement dans le plan focal dudit collimateur catadioptrique (150),

   les surfaces (202, 204, 206, 208) étant

     - telles que le faisceau lumineux incident (108) est successivement réfracté par la surface d'entrée réfractive (202), réfléchi par la première surface réfléchissante (204), réfléchi par la deuxième surface réfléchissante (206) et réfracté par la surface de sortie réfractive (208) en un faisceau lumineux sortant (110), et
     - telles que le faisceau lumineux sortant (110) est collimaté sensiblement à infini parallèlement à une direction formant un angle d'inclinaison ($\theta_0$) non nul avec ledit axe optique (102),

   le collimateur catadioptrique (150) et la source d'éclairement (104) étant tels que le faisceau lumineux sortant (110) pénètre dans le guide optique (514) par la section d'injection (504) et est extrait en un faisceau lumineux extrait (510) par la section d'extraction (508).

2. Lunettes informatives (500) selon la revendication 1, **caractérisées en ce que** la section d'injection (504) se présente sous la forme d'une surface rectangulaire de largeur " p " et de hauteur " p' " supérieure à p.

3. Lunettes informatives (500) selon l'une des revendications 1 ou 2, **caractérisées en ce que** le collimateur catadioptrique (150) est monobloc.

4. Lunettes informatives (500) selon l'une des revendications 1 à 3, **caractérisées en ce qu'**elles comportent une branche et **en ce que** le collimateur catadioptrique (150) et la source d'éclairement (104) sont disposés sur ladite branche.

5. Lunettes informatives (500) selon l'une des revendications 1 à 4, **caractérisées en ce que** la première surface réfléchissante (204) est convexe et la surface de sortie réfractive (208) est convexe.

6. Lunettes informatives (500) selon la revendication 5, **caractérisées en ce que**, la surface d'entrée réfractive (202) est concave et la deuxième surface réfléchissante (206) est concave.

7. Lunettes informatives (500) selon l'une des revendications 1 à 6, **caractérisées en ce que** la surface d'entrée réfractive (202), la première surface réfléchissante (204), la deuxième surface réfléchissante (206) et la surface de sortie réfractive (208) sont des surfaces asphériques d'ordre pair.

8. Lunettes informatives (500) selon l'une des revendications 1 à 7, **caractérisées en ce que** la source d'éclairement (104) est collée à la surface d'entrée réfractive (202).

**Claims**

1. Informative eyeglasses (500) comprising:

   - an optical guide (514) forming an eyeglass lens (500) and having an injection section (504) and an extraction section (508),

- a catadioptric collimator (150) comprising:

  - a refractive inlet surface (202), a first reflecting surface (204), a second reflecting surface (206) and a refractive outlet surface (208), each surface (202, 204, 206, 208) constituting a surface of revolution with the same axis of revolution, said axis of revolution constituting the optical axis (102) of the collimator (150),

  - an illumination source (104) which generates an incident light beam (108) which illuminates the refractive inlet surface (202) and the axis of which is offset relative to said optical axis (102) and which is substantially in the focal plane of said catadioptric collimator (150),

the surfaces (202, 204, 206, 208) being

  - such that the incident light beam (108) is, in succession, refracted by the refractive inlet surface (202), reflected by the first reflecting surface (204), reflected by the second reflecting surface (206) and refracted by the refractive outlet surface (208) as an outgoing light beam (110), and
  - such that the outgoing light beam (110) is collimated substantially to infinity parallel to a direction forming a non- zero angle of inclination ($\theta_0$) with said optical axis (102),

the catadioptric collimator (150) and the illumination source (104) being such that the outgoing light beam (110) enters the optical guide (514) through the injection section (504) and is extracted as an extracted light beam (510) through the extraction section (508).

2. Informative eyeglasses (500) according to claim 1, **characterised in that** the injection section (504) is in the form of a rectangular surface of width "p" and height "p'" greater than p.

3. Informative eyeglasses (500) according to either claim 1 or claim 2, **characterised in that** the catadioptric collimator (150) is in a single piece.

4. Informative eyeglasses (500) according to any one of claims 1 to 3, **characterised in that** they comprise an arm and **in that** the catadioptric collimator (150) and the illumination source (104) are arranged on said arm.

5. Informative eyeglasses (500) according to any one of claims 1 to 4, **characterised in that** the first reflecting surface (204) is convex and the refractive outlet surface (208) is convex.

6. Informative eyeglasses (500) according to claim 5, **characterised in that** the refractive inlet surface (202) is concave and the second reflecting surface (206) is concave.

7. Informative eyeglasses (500) according to any one of claims 1 to 6, **characterised in that** the refractive inlet surface (202), the first reflecting surface (204), the second reflecting surface (206) and the refractive outlet surface (208) are aspherical surfaces of even order.

8. Informative eyeglasses (500) according to any one of claims 1 to 7, **characterised in that** the illumination source (104) is bonded to the refractive inlet surface (202).

**Patentansprüche**

1. Informative Brille (500), umfassend:

  - einen Lichtleiter (514), der ein Brillenglas (500) bildet und Injektionsabschnitt (504) und einen Extraktionsabschnitt (508) aufweist,
  - einen katadioptrischen Kollimator (150), enthaltend:

    - eine refraktive Eintrittsoberfläche (202), eine erste reflektierende Oberfläche (204), eine zweite reflektierende Oberfläche (206) und eine refraktive Austrittsoberfläche (208), wobei jede Oberfläche (202, 204, 206, 208) eine Drehoberfläche mit gleicher Drehachse bildet, wobei die Drehachse die optische Achse (102) des Kollimators (150) bildet,

- eine Beleuchtungsquelle (104), die ein einfallendes Lichtbündel (108) erzeugt, das die refraktive Eintrittsoberfläche (202) beleuchtet und deren Achse in Bezug auf die optische Achse (192) axial verschoben ist und die im Wesentlichen in der Fokusebene des katadioptrischen Kollimators (150) liegt,

wobei die Oberflächen (202, 204, 206, 208) so beschaffen sind,

- dass das einfallende Lichtbündel (108) nacheinander durch die refraktive Eintrittsoberfläche (102) gebrochen, von der ersten reflektierenden Oberfläche (204) reflektiert, von der zweiten reflektierenden Oberfläche (206) reflektiert und von der refraktiven Austrittsoberfläche (208) in ein austretendes Lichtbündel (110) gebrochen wird, und
- dass das austretende Lichtbündel (110) im Wesentlichen ins Unendliche parallel zu einer Richtung abgebildet wird, die einen Nicht-Null-Neigungswinkel ($\theta_0$) mit der optischen Achse (102) bildet,

wobei der katadioptrische Kollimator (150) und die Beleuchtungsquelle (104) so beschaffen sind, dass das austretende Lichtbündel (110) durch den Injektionsabschnitt (504) in die optische Führung (514) eindringt und in einem durch den Extraktionsabschnitt (508) extrahierten Lichtbündel (510) extrahiert wird.

2. Informative Brille (500) nach Anspruch 1, **dadurch gekennzeichnet, dass** der Injektionsabschnitt (504) die Form einer rechtwinkligen Fläche mit der Breite " p " und der Höhe " p' " aufweist, die größer als p ist.

3. Informative Brille (500) nach einem der Ansprüche 1 oder 2, **dadurch gekennzeichnet, dass** der katadioptrische Kollimator (150) aus einem Stück ist.

4. Informative Brille (500) nach einem der Ansprüche 1 bis 3, **dadurch gekennzeichnet, dass** sie einen Arm aufweist, und dass der katadioptrische Kollimator (150) und die Beleuchtungsquelle (104) auf diesem Arm angeordnet sind.

5. Informative Brille (500) nach einem der Ansprüche 1 bis 4, **dadurch gekennzeichnet, dass** die erste reflektierende Oberfläche (204) konvex ist und die refraktive Austrittsoberfläche (208) konvex ist.

6. Informative Brille (500) nach Anspruch 5, **dadurch gekennzeichnet, dass** die refraktive Eintrittsoberfläche (202) konkav ist und die zweite reflektierende Oberfläche (206) konkav ist.

7. Informative Brille (500) nach einem der Ansprüche 1 bis 6, **dadurch gekennzeichnet, dass** die refraktive Eintrittsoberfläche (202), die erste reflektierende Oberfläche (204), die zweite reflektierende Oberfläche (206) und die refraktive Austrittsoberfläche (208) asphärische Oberflächen geradzahliger Ordnung sind.

8. Informative Brille (500) nach einem der Ansprüche 1 bis 7, **dadurch gekennzeichnet, dass** die Beleuchtungsquelle (104) auf die refraktive Eintrittsoberfläche (202) aufgeklebt ist.

Fig. 1

Fig. 2

_Fig. 3_

_Fig. 4_

Fig. 5

Fig. 6

Fig. 7

Fig. 8

EP 2 277 074 B1

**EP 2 277 074 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2873212 A
- JP 2002162598 A